# EUROPÄISCHE PATENTSCHRIFT

(11) **EP 1 915 243 B1**
(45) Veröffentlichungstag und Bekanntmachung des Hinweises auf die Patenterteilung: **12.01.2011**
(21) Anmeldenummer: 06777932.2
(22) Anmeldetag: 24.07.2006
(51) Int. Cl.: B29B 11/16, B29B 15/10, B29K 101/10, B29K 307/04, B29K 301/12

(54) **FIXIERFADEN ZUM HEFTEN VON VERSTÄRKUNGSFASERN**
FIXING THREAD FOR STITCHING REINFORCING FIBRES
FIL DE FIXATION SERVANT A FIXER DES FIBRES DE RENFORCEMENT

(30) Priorität: 22.07.2005 DE 102005034394
(43) Veröffentlichungstag der Anmeldung: 30.04.2008
(73) Patentinhaber: Airbus Deutschland GmbH, 21129 Hamburg (DE)
(72) Erfinder: JÖRN, Paul, 22763 Hamburg (DE); EBERTH, Ulrich, 86641 Rain (DE)
(74) Vertreter: Peckmann, Ralf
(86) Internationale Anmeldenummer: PCT/EP2006/064578
(87) Internationale Veröffentlichungsnummer: WO 2007/010053

(56) Entgegenhaltungen:
- EP-A- 0 272 083
- EP-A- 0 303 499
- EP-A- 0 351 201
- EP-A- 0 432 439
- US-A- 4 741 873
- US-A- 4 764 427
- US-A1- 2005 059 309

## Beschreibung

Die Erfindung betrifft einen Fixierfaden zum Heften von Verstärkungsfasern, insbesondere zur Bildung eines Faservorformlings, für die Herstellung eines faserverstärkten Verbundbauteils mittels Imprägnierung mit einem aushärtbaren Kunststoffmaterial.

Zur Herstellung von faserverstärkten Verbundbauteilen mit aushärtbaren Kunststoffmaterialien, beispielsweise Epoxyd- oder Polyesterharzen, werden oftmals textile Nähverfahren zur Bildung der zur Verstärkung erforderlichen Faservorformlinge aus Verstärkungsfasern und/oder Verstärkungsgeweben eingesetzt. Als Fixierfäden werden unter anderem technische Verstärkungstextilien, wie zum Beispiel Aramidfasern, Glasfasern oder Kohlefasern verwendet.

Darüber hinaus werden unter anderem aus Gründen der besseren Verarbeitbarkeit nicht verstärkende Fäden, wie zum Beispiel elastische, aber im späteren Verbundbauteil mechanisch nur gering belastbare Polyesterfäden oder dergleichen eingesetzt. Bei der Verwendung eines Fixierfadens, der gleichzeitig als Verstärkungsfaser wirkt, kann in Fadenrichtung zusätzlich eine Festigkeits- und Steifigkeitserhöhung des Verbundbauteils erreicht werden. Sowohl verstärkende als auch nicht verstärkende Fixierfäden werden zur Heftung von Verstärkungsfasern auf einer Unterlage oder bei der Kombination von Faservorformlingen eingesetzt. Weiterhin können mittels der Fixierfäden auch Verstärkungsgewebe und/oder Verstärkungsfasern zur Bildung von komplexen Faservorformlingen ohne eine Unterlage zusammengeheftet werden.

Das fertige Verbundbauteil wird in bekannter Weise durch Imprägnierung des Faservorformlings mit einem aushärtbaren Kunststoffmaterial bzw. einem durch Vernetzung aushärtbaren Harzsystem, insbesondere einem Epoxydharz, einem Polyesterharz, einem BMI-Harz oder dergleichen, und die anschließende Aushärtung des Kunststoffmaterials gebildet, wodurch sich eine den Faservorformling umschließende Matrix aus dem aushärtbaren Kunststoffmaterial bildet. Hierfür kann zum Beispiel das bekannte RTM-Verfahren ("Resin-Molding-Transfer") eingesetzt werden.

Beim ebenfalls vorbekannten TFP-Verfahren ("Tailored Fiber Placement") zur Bildung von Faservorformlingen wird beispielsweise eine Verstärkungsfaser mit einem Fixierfaden mit Hilfe eines CNC- Näh- bzw. Stickautomaten auf einer ebenen Unterlage angeheftet. Die Faserorientierung kann hierbei annähernd beliebig eingestellt und während des Legevorganges verändert werden, so dass eine optimale Anpassung der Faserorientierung an die vom späteren Verbundbauteil aufzunehmenden mechanischen Kräfte erreichbar ist.

Bei der Verwendung von konventionellen Fixierfäden, beispielsweise von Polyesterfäden oder dergleichen, kann es jedoch zu einer Verschlechterung der mechanischen Eigenschaften des faserverstärkten Verbundbauteils kommen, da im Bereich der Fixierfäden Ondulationen und/oder Brüche von Verstärkungsfasern sowie Mikrorisse im Bereich der Matrix auftreten können. Der Grund für die Entstehung der Mikrorisse liegt unter anderem in Harzansammlungen in den Einstichbereichen der Fixierfäden. Da die Matrix zum Teil sehr spröde ist, kann es hier aufgrund unterschiedlicher Wärmeausdehnungskoeffizienten und Steifigkeitssprünge zur Bildung von Mikrorissen kommen.

Zur Verbesserung der mechanischen Eigenschaften von Verbundbauteilen ist es weiterhin bekannt, insbesondere beim TFP-Verfahren auflösbare Fixierfäden zu verwenden. Durch das Auflösen der Fixierfäden nach dem Abschluss des Nähvorgangs werden unter anderem die durch die Fixierfäden verursachten Ondulationen der Verstärkungsfasern verringert. Weiterhin geht der auflösbare Fixierfaden vor dem Aushärtungsprozess in der Matrix in Lösung und kann bei einer geeigneten Materialauswahl zusätzlich deren Schlagzähigkeit verbessern, so dass sich weniger Mikrorisse in den Einstichbereichen der Fixierfäden bilden.

Allerdings sind die löslichen Fixierfäden für das TFP-Verfahren oder andere Nähverfahren nur bedingt geeignet, da sie nicht über die erforderlichen mechanischen Verarbeitungseigenschaften der konventionellen Fixierfäden verfügen und somit Fadenbrüche, Filamentablösungen, Spliss etc. auftreten können. Weiterhin kann sich das gesamte Material der löslichen Fixierfäden unkontrolliert über die gesamte Matrix ausbreiten und zu undefinierten mechanischen Veränderungen des gesamten Verbundbauteils führen.

Aus der EP-A-0 272 083 ist ein Preformmaterial zur Verwendung in faserverstärkten Kunststoffen bekannt, dass durch laminieren und Verkleben einer Vielzahl von bogenförmigen Substraten, die Verstärkungsfasern aufweisen, gebildet wird. Wenigstens eines der laminierten Substrate ist ein gewebtes Textilsubstrat, das ein Klebematerial aufweist, das aus thermoplastischen Polymer besteht, das an dem Substrat anhaftet und sich im Wesentlichen linear entlang der Verstärkungsfasern oder Hilfsfäden des Substrates erstreckt.

In der US 2005/0059309 A1 werden Materialien und Verfahren beschrieben, um Preformmaterialien für schlagfeste Verbundwerkstoffmaterialien herzustellen, die geeignet sind, im Nasspressverfahren verarbeitet zu werden.

Aufgabe der Erfindung ist es, eine lokale Duktilitätssteigerung im Bereich der Vernähung in der Matrix bei gleichzeitig optimalen Verarbeitungseigenschaften des Fixierfadens bei der Herstellung von Faservorformlingen beispielsweise nach dem TFP-Verfahren zu erreichen.

Diese Aufgabe wird durch einen Fixierfaden gemäß dem Kennzeichen des Patentanspruchs 1 gelöst.

Dadurch, dass der Fixierfaden ein Interface, insbesondere zur lokalen Erhöhung der Duktilität einer durch das aushärtbare Kunststoffmaterial gebildeten Matrix, und mindestens einen Grundfaden aufweist,
werden die mechanischen Eigenschaften des fertigen Verbundbauteils in Folge einer verringerten Neigung zur Bildung von Mikrorissen im Bereich der Einstichstellen des Fixierfadens verbessert. Gleichzeitig ermöglicht der erfindungsgemäße Fixierfaden eine optimale Verarbeitbarkeit des Fixierfadens, insbesondere bei Anwendung des "TFP"- Verfahrens. Darüber hinaus ermöglicht das Interface eine lediglich lokale Erhöhung der Duktilität der Harzmatrix im Bereich des Fixierfadens, so dass eine Beeinträchtigung der mechanischen Eigenschaften der übrigen Harzmatrix weitgehend ausgeschlossen wird. Darüber hinaus lässt sich der erfindungsgemäße Fixierfaden auf vorbekannten CNC-Näh- bzw. Stickautomaten ohne größere konstruktive Änderungen leicht und mit hoher Geschwindigkeit verarbeiten.

Darüber hinaus ermöglicht der erfindungsgemäße Fixierfaden auch das Heften von abgelegten Fasersträngen aus Verstärkungsfasern zur Schaffung von Verstärkungs-kungsflächengebilden. Derartige Verstärkungsflächengebilde sind beispielsweise Gewebe oder Gelege aus Kohlefasern, Glasfasern, Aramidfasern oder dergleichen.

Eine weitere vorteilhafte Ausgestaltung des erfindungsgemäßen Fixierfadens sieht vor, dass der Grundfaden oder die Grundfäden die Verarbeitbarkeit des Interfaces verbessern und/oder die mechanischen Eigenschaften des Verbundbauteils beeinflussen.

Hierdurch wird ein Einsatz des erfindungsgemäßen Fixierfadens, der durch Kombination mindestens eines Grundfadens mit einem Interface aus einem thermoplastischen Material gebildet ist, auf schnell laufenden automatischen, insbesondere auf CNC-gesteuerten Näh- bzw. Stickautomaten oder dergleichen, zur Fertigung von Faservorformlingen im TFP-Verfahren möglich.

Nach Maßgabe einer weiteren vorteilhaften Ausgestaltung ist vorgesehen, dass der Grundfaden oder die Grundfäden mit einem eine ausreichende Verarbeitbarkeit gewährleistenden Fadenmaterial, insbesondere mit einem Polyestermaterial oder dergleichen, gebildet sind.

Insbesondere ein mit Polyester gebildeter Grundfaden ermöglicht eine im Ergebnis gute Verarbeitbarkeit des Fixierfadens, der durch die Kombination mindestens eines Grundfadens mit dem Interface aus einem thermoplastischen Material gebildet ist.

Mit dem Begriff einer guten Verarbeitbarkeit ist unter anderem gemeint, dass sich der Fixierfaden insbesondere auf automatischen Näh- bzw. Stickautomaten ohne Brüche, Dehnungen, Fadenrisse oder dergleichen verarbeiten lässt.

Gemäß einer weiteren vorteilhaften Ausgestaltung sind der Grundfaden oder die Grundfäden mit einem mechanisch hoch belastbaren Material, insbesondere mit Glasfasern, mit Kohlefasern, mit Aramidfasern oder dergleichen, gebildet.

Hierdurch kann der Fixierfaden zunächst zum Anheften und Fixieren der Verstärkungsfasern dienen, erforderlichenfalls aber in Richtung einer Längsachse der Fixierfäden in Ergänzung zu den Verstärkungsfasern im fertigen Verbundbauteil auch mechanische Kräfte in einem nennenswerten Umfang aufnehmen. Darüber hinaus ist es möglich, den Grundfaden selbst aus einer Vielzahl von Filamenten, das heißt beispielsweise aus einzelnen Glasfasern, Kohlefasern, Aramidfasern oder dergleichen zu bilden.

In Gemäßheit einer weiteren vorteilhaften Ausgestaltung weist der Fixierfaden eine im Wesentlichen kreisförmige Umfangskontur auf.

Hierdurch lässt sich der Fixierfaden auf vorbekannten CNC-Näh- bzw. Stickautomaten einfach und in der Regel ohne größere maschinenseitige Anpassungen verarbeiten.

Nach einer weiteren vorteilhaften Ausgestaltung der Erfindung ist das Interface durch eine zumindest abschnittsweise Ummantelung mindestens eines Grundfadens mit einem Kunststoffmaterial, insbesondere mit einem thermoplastischen Kunststoffmaterial, gebildet.

Hierdurch lässt sich der erfindungsgemäße Fixierfaden auf einfache Art und Weise durch die Ummantelung eines konventionellen Fixierfadens, beispielsweise eines Polyesterfadens, mit dem thermoplastischen Material bilden. Durch die Ummantelung mit dem thermoplastischen Material wird die Duktilität der den Fixierfaden umgebenden Harzmatrix bzw. des Harzsystems nur lokal erhöht. Hierdurch wird zum einen die Neigung zur Bildung von Mikrorissen in den Einstichbereichen der Fixierfäden verringert und gleichzeitig eine unkontrollierte Durchsetzung der Harzmatrix mit dem thermoplastischen Material vermieden. Weiterhin wird durch die Ummantelung, die eine nur relativ geringe Materialstärke aufweist, nur ein relativ geringes Volumen des thermoplastischen Materials während des Aushärtungsprozesses in die Matrix freigesetzt, so dass sich erfindungsgemäß nur eine lokale Änderung der Duktilität der Matrix ergibt.

Eine weitere vorteilhafte Ausgestaltung der Erfindung sieht vor, dass das Interface durch eine Verbindung mindestens eines Grundfadens mit einem Interfacefaden aus einem Kunststoffmaterial, insbesondere aus einem thermoplastischen Kunststoffmaterial, gebildet ist.

Hierbei wird ein Grundfaden mit einer beispielsweise im Wesentlichen halbkreisförmigen Querschnittsgeometrie im Bereich der Grundlinie des Halbkreises mit einem Interfacefaden mit einer gleichfalls beispielsweise im Wesentlichen halbkreisförmigen Querschnittsgeometrie verbunden, so dass ein Fixierfaden mit einer ebenfalls im Wesentlichen kreisförmigen Querschnittsgeometrie entsteht. Die Verbindung des Grundfadens mit dem beispielsweise aus einem Polypropylenmaterial gebildeten Interfacefaden kann zum Beispiel durch Anschmelzen des thermoplastischen Materials an den Grundfaden erfolgen. Hierbei sind von der Kreisform abweichende, nahezu beliebige Querschnittsgeometrien möglich.

Nach Maßgabe einer weiteren vorteilhaften Ausgestaltung ist das Interface durch eine Verdrillung mindestens eines Grundfadens mit mindestens einem Interfacefaden aus einem Kunststoffmaterial, insbesondere aus einem thermoplastischen Kunststoffmaterial, gebildet.

Hierdurch kann der erfindungsgemäße Fixierfaden auf besonders einfache Art und Weise mit vorkonfektionierten Halbzeugen, beispielsweise mit einem konventionellen Polyesterfixierfaden und einem thermoplastischen Faden, gebildet werden.

In der Zeichnung zeigt:
- **Fig. 1**: einen Querschnitt durch ein erstes Ausführungsbeispiel des erfindungs- gemäßen Fixierfadens,
- **Fig. 2**: einen Querschnitt durch ein zweites Ausführungsbeispiel des erfin- dungsgemäßen Fixierfadens,
- **Fig. 3**: einen Querschnitt durch eine dritte Variante des erfindungsgemäßen Fixierfadens und
- **Fig. 4**: eine Draufsicht auf einen Abschnitt einer vierten Variante des erfin- dungsgemäßen Fixierfadens.

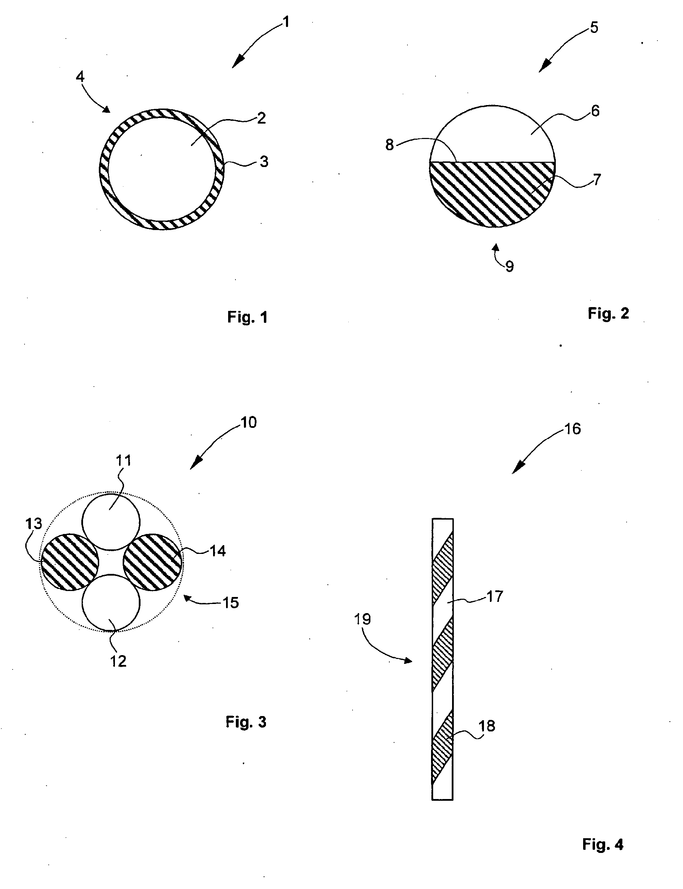

Die **Fig. 1** zeigt einen Querschnitt durch ein erstes Ausführungsbeispiel des erfindungsgemäßen Fixierfadens.

Ein Fixierfaden 1 ist durch einen Grundfaden 2 gebildet, der eine Ummantelung 3 aus einem thermoplastischen Material zur Bildung eines Interfaces 4 aufweist. Der Grundfaden 2 ist ein konventioneller Fixierfaden, beispielsweise ein mechanisch nur leicht belastbarer Polyesterfaden oder dergleichen. Die Ummantelung 3 stellt das Interface 4 zur umgebenden, nicht dargestellten Matrix aus dem aushärtbaren Kunststoffmaterial dar, wodurch sich die erwünschte lokale Duktilitätserhöhung der umgebenden Matrix, insbesondere in den Einstichbereichen des Fixierfadens 1, ergibt, so dass durch den Einsatz des Fixierfadens 1 die Neigung zur Bildung von Mikrorissen in der Matrix des fertigen Verbundbauteils signifikant verringert wird. Das thermoplastische Material der Ummantelung 3 verteilt sich während des Aushärtungsprozesses lokal im Grenzbereich zwischen dem Fixierfaden und der Matrix. Die Ummantelung 3 ist aus einem geeigneten thermoplastischen Kunststoffmaterial, beispielsweise aus Polyethylen, aus Polypropylen oder dergleichen, gebildet und weist im Verhältnis zum Durchmesser des Grundfadens 2 eine geringe Materialstärke auf, so dass der Eintrag des thermoplastischen Materials in die Matrix während des Aushärtungsprozesses minimiert wird. Das aushärtbare Kunststoffmaterial bzw. das insbesondere durch Vernetzung aushärtende Harzsystem zur Bildung der Matrix ist beispielsweise ein Epoxydharz, ein Polyesterharz, ein BMI-Harz oder dergleichen.

Die **Fig. 2** und die **Fig. 3** zeigen Querschnittsdarstellungen durch alternative Ausführungsformen des erfindungsgemäßen Fixierfadens.

Der Fixierfaden 5 in der Fig. 2 ist mit wiederum einem Grundfaden 6 sowie mit einem Interfacefaden 7 gebildet, die im Bereich einer Grundlinie 8 miteinander, beispielsweise durch Anschmelzen des mit einem thermoplastischen Material gebildeten Interfacefadens 7 oder dergleichen, verbunden sind. Der Grundfaden 6 sowie der Interfacefaden 7 weisen jeweils bevorzugt eine ungefähr halbkreisförmige Querschnittsgeometrie auf, so dass der Fixierfaden 5 eine im Wesentlichen kreisförmige Querschnittsgeometrie aufweist. Hierbei bildet der Interfacefaden 7 das eigentliche Interface 9, welches erfindungsgemäß die lokale Duktilitätserhöhung im Bereich der nicht dargestellten umgebenden Matrix bewirkt. Der Grundfaden 6 ist wiederum ein konventioneller Fixierfaden, beispielsweise ein Polyesterfaden oder dergleichen.

Der Fixierfaden 10 in der Darstellung der Fig. 3 ist mit zwei Grundfäden 11,12 sowie zwei Interfacefäden 13,14 gebildet. Hierbei weist der Fixierfaden 10, wie durch die punktierte Umfangslinie angedeutet, eine im Wesentlichen kreisförmige Umfangskontur auf. Bei den Grundfäden 11,12 handelt es sich wiederum um konventionelle Fixierfäden, beispielsweise um Polyesterfäden oder dergleichen. Die Interfacefäden 13,14 sind demgegenüber mit einem thermoplastischen Material zur Bildung eines Interfaces 15 gebildet, das ebenfalls zur lokalen Erhöhung der Duktilität im Grenzbereich zur Matrix dient.

Die **Fig. 4** zeigt eine Draufsicht auf einen Abschnitt einer vierten Ausführungsvariante des erfindungsgemäßen Fixierfadens. Der Fixierfaden 16 weist einen Grundfaden 17 auf und erstreckt sich parallel zur Zeichnungsebene. Der Grundfaden 17 ist mit einem Interfacefaden 18 aus einem thermoplastischen Material zur Bildung eines duktilitätserhöhenden Interfaces 19 spiralförmig umwickelt. Die Umwicklung kann beispielsweise auch mit mehr als einer Lage erfolgen, wobei sich der Wickelsinn von Lage zu Lage ändert.

Die Grundfäden 2,6,11,12 sowie 17 können anstatt mit konventionellen Fixierfäden, die üblicherweise aus einem Polyestermaterial oder dergleichen bestehen, zumindest teilweise auch mit Fäden gebildet werden, die aus einem mechanisch hoch belastbaren Fadenmaterial bestehen, so dass die so gebildeten Fixierfäden innerhalb des fertigen Verbundbauteils zusätzlich zur eigentlichen Fixierfunktion innerhalb des Faservorformlings in Richtung der jeweiligen Längsachsen der Fixierfäden auch in einem nennenswerten Umfang mechanische Kräfte aufnehmen können. Als hochbelastbares Fadenmaterial kommen beispielsweise Bündel aus einzelnen Glasfasern, Kohlefasern oder Aramidfasern in Betracht.

Die Interfacefäden 7,13,14 sowie 18 sind demgegenüber in sämtlichen gezeigten Ausführungsvarianten mit einem thermoplastischen Material, beispielsweise mit Polypropylen, Polyethylen oder dergleichen, gebildet, um die erfindungsgemäß angestrebte, definierte lokale Erhöhung der Duktilität der Matrix im Grenzbereich zwischen dieser und dem Fixierfaden zu erzielen.

Die erfindungsgemäßen Fixierfäden 1,5,10,16 können beispielsweise auch für die Herstellung von endlosen, bandförmigen Gelegen oder Geweben mit Fasersträngen aus Verstärkungsfasern, wie zum Beispiel Kohlefasern, Glasfasern, Aramidfasern oder dergleichen, eingesetzt werden. Derartige Gelege oder Gewebe werden auch mit dem Begriff Verstärkungsflächengebilde bezeichnet. In diesem Fall werden mittels der Fixierfäden 1,5,10,16 beispielsweise die aufeinander abgelegten bzw. verwobenen Faserstränge aus Verstärkungsfasern zusammen geheftet und somit gegen ungewollte Lageänderungen etc. gesichert.

Die Erfindung betrifft demnach einen Fixierfaden 1, 15, 10, 16 zum Heften von Verstärkungsfasern, insbesondere zur Bildung eines Faservorformlings, für die Herstellung eines faserverstärkten Verbundbauteils mittels Imprägnierung mit einem aushärtbaren Kunststoffmaterial, wobei der Fixierfaden ein Interface 4, 9, 15, 19, insbesondere zur lokalen Erhöhung der Duktilität einer durch das aushärtbare Kunststoffmaterial gebildeten Matrix, und mindestens einen Grundfaden 2, 6, 11, 12, 17 aufweist.

Der Grundfaden 2, 6, 11, 12, 17 oder die Grundfäden 2, 6, 11, 12, 17 beispielsweise verbessern die Verarbeitbarkeit des Interfaces 4, 9, 15, 19 und/oder beeinflussen die mechanischen Eigenschaften des Verbundbauteils.

Der Grundfaden 2, 6, 11, 12, 17 oder die Grundfäden 2, 6, 11, 12, 17 sind vorzugsweise mit einem eine ausreichende Verarbeitbarkeit gewährleistenden Fadenmaterial, insbesondere mit einem Polyestermaterial oder dergleichen, gebildet.

Der Grundfaden 2, 6, 11, 12, 17 oder die Grundfäden 2, 6, 11, 12, 17 sind ferner vorzugsweise mit einem mechanisch hochbelastbaren Material, insbesondere mit Glasfasern, mit Kohlefasern, mit Aramidfasern oder dergleichen, gebildet.

Der Fixierfaden 1, 5, 10, 16 weist vorteilhaft eine im Wesentlichen kreisförmige Umfangskontur auf.

Das Interface 4 ist beispielsweise durch eine zumindest abschnittsweise Ummantelung 3 mindestens eines Grundfadens 2 mit einem Kunststoffmaterial, insbesondere mit einem thermoplastischen Kunststoffmaterial, gebildet.

Das Interface 9 ist insbesondere durch eine Verbindung mindestens eines Grundfadens 6 mit einem Interfacefaden 7 aus einem Kunststoffmaterial, insbesondere aus einem thermoplastischen Kunststoffmaterial, gebildet.

Das Interface 15 ist ferner vorteilhaft durch eine Verdrillung mindestens eines Grundfadens 11, 12 mit mindestens einem Interfacefaden 13, 14 aus einem Kunststoffmaterial, insbesondere aus einem thermoplastischen Kunststoffmaterial, gebildet.

Zudem ist das Interface 19 beispielsweise durch Umwickeln mindestens eines Grundfadens 17 mit mindestens einem bandförmigen Interfacefaden 18 aus einem Kunststoffmaterial, insbesondere aus einem thermoplastischen Kunststoffmaterial, gebildet.

### Bezugszeichenliste

- 1: Fixierfaden
- 2: Grundfaden
- 3: Ummantelung
- 4: Interface
- 5: Fixierfaden
- 6: Grundfaden
- 7: Interfacefaden
- 8: Grundlinie
- 9: Interface
- 10: Fixierfaden
- 11: Grundfaden
- 12: Grundfaden
- 13: Interfacefaden
- 14: Interfacefaden
- 15: Interface
- 16: Fixierfaden
- 17: Grundfaden
- 18: Interfacefaden
- 19: Interface

## Patentansprüche

1. Verwendung eines Fixierfadens (1, 5, 10, 16) zum Heften von Verstärkungsfasern zur Bildung eines Faservorformlings für die Herstellung eines faserverstärkten Verbundbauteils mittels Imprägnierung mit einem aushärtbaren Kunststoffmaterial, wobei der Fixierfaden (1, 5, 10, 16) ein Interface (4, 9, 15, 19) aus einem thermoplastischen Kunststoffmaterial zur lokalen Erhöhung der Duktilität in den Einstichbereichen des Fixierfadens einer durch das aushärtbare Kunststoffmaterial gebildeten Matrix aufweist, wobei der Fixierfaden (1, 5, 10, 16) mindestens einen Grundfaden (2, 6, 11, 12, 17) aufweist, der aus einer Vielzahl von Filamenten aus Kohlefasern gebildet ist **dadurch gekennzeichnet, dass** das Interface (4) durch eine Ummantelung (3) des mindestens einen Grundfadens (2) gebildet ist.

2. Fixierfaden (1, 5, 10, 16) zum Heften von Verstärkungsfasern zur Bildung eines Faservorformlings, für die Herstellung eines faserverstärkten Verbundbauteils mittels Imprägnierung mit einem aushärtbaren Kunststoffmaterial, wobei der Fixierfaden (1, 5, 10, 16) ein Interface (4, 9, 15, 19) aus einem thermoplastischen Kunststoffmaterial zur lokalen Erhöhung der Duktilität in den Einstichbereichen des Fixierfadens einer durch das aushärtbare Kunststoffmaterial gebildeten Matrix aufweist, wobei der Fixierfaden (1, 5, 10, 16) mindestens einen Grundfaden (2, 6, 11, 12, 17) aufweist, der aus einer Vielzahl von Filamenten aus Kohlefasern gebildet ist **dadurch gekennzeichnet, dass** das Interface (4) durch eine Ummantelung (3) des mindestens einen Grundfadens (2) gebildet ist.

3. Fixierfaden (1, 5, 10, 16) zum Heften von Verstärkungsfasern zur Bildung eines Faservorformlings, für die Herstellung eines faserverstärkten Verbundbauteils mittels Imprägnierung mit einem aushärtbaren Kunststoffmaterial, wobei der Fixierfaden (1, 5, 10, 16) ein Interface (4, 9, 15, 19) aus einem thermoplastischen Kunststoffmaterial zur lokalen Erhöhung der Duktilität in den Einstichbereichen des Fixierfadens einer durch das aushärtbare Kunststoffmaterial gebildeten Matrix aufweist, wobei der Fixierfaden (1, 5, 10, 16) mindestens einen Grundfaden (2, 6, 11, 12, 17) aufweist, der aus einer Vielzahl von Filamenten aus Kohlefasern gebildet ist **dadurch gekennzeichnet, dass** das Interface (9) durch eine Verbindung mindestens eines Grundfadens (6) mit einer halbkreisförmigen Querschnittsgeometrie mit einem Interfacefaden (7) mit einer halbkreisförmigen Querschnittsgeometrie gebildet ist.

4. Fixierfaden (1, 5, 10, 16) zum Heften von Verstärkungsfasern zur Bildung eines Faservorformlings, für die Herstellung eines faserverstärkten Verbundbauteils mittels Imprägnierung mit einem aushärtbaren Kunststoffmaterial, wobei der Fixierfaden (1, 5, 10, 16) ein Interface (4, 9, 15, 19) aus einem thermoplastischen Kunststoffmaterial zur lokalen Erhöhung der Duktilität in den Einstichbereichen des Fixierfadens einer durch das aushärtbare Kunststoffmaterial gebildeten Matrix aufweist, wobei der Fixierfaden (1, 5, 10, 16) mindestens einen Grundfaden (2, 6, 11, 12, 17) aufweist, der aus einer Vielzahl von Filamenten aus Kohlefasern gebildet ist **dadurch gekennzeichnet, dass** das Interface (15) durch eine Verdrillung des mindestens einen Grundfadens (11, 12) mit mindestens einem Interfacefaden (13, 14) gebildet ist.

5. Fixierfaden (1, 5, 10, 16) zum Heften von Verstärkungsfasern zur Bildung eines Faservorformlings, für die Herstellung eines faserverstärkten Verbundbauteils mittels Imprägnierung mit einem aushärtbaren Kunststoffmaterial, wobei der Fixierfaden (1, 5, 10, 16) ein Interface (4, 9, 15, 19) aus einem thermoplastischen Kunststoffmaterial zur lokalen Erhöhung der Duktilität in den Einstichbereichen des Fixierfadens einer durch das aushärtbare Kunststoffmaterial gebildeten Matrix aufweist, wobei der Fixierfaden (1, 5, 10, 16) mindestens einen Grundfaden (2, 6, 11, 12, 17) aufweist, der aus einer Vielzahl von Filamenten aus Kohlefasern gebildet ist **dadurch gekennzeichnet, dass** das Interface (19) durch Umwickeln des mindestens einen Grundfadens (17) mit mindestens einem bandförmigen Interfacefaden (18) gebildet ist.

6. Fixierfaden (1, 5, 10, 16) nach einem der Ansprüche 2 bis 5, **dadurch gekennzeichnet, dass** der Fixierfaden (1, 5, 10, 16) eine im Wesentlichen kreisförmige Umfangskontur aufweist.

## Claims

1. Use of a fixing thread (1, 5, 10, 16) for sewing together reinforcing fibers to form a fiber preform, for the production of a fiber-reinforced composite component by impregnation with a curable synthetic material, wherein the fixing thread (1, 5, 10, 16) comprises an interface (4, 9, 15, 19) of a thermoplastic synthetic material for locally increasing the ductility of a matrix formed by the curable synthetic material in the regions where the fixing thread penetrates, the fixing thread (1, 5, 10, 16) having at least one core thread (2, 6, 11, 12, 17), which is formed by a plurality of filaments of carbon fibers, **characterized in that** the interface (4) is formed by an enclosure (3) enclosing the at least one core thread (2).

2. Fixing thread (1, 5, 10, 16) for sewing together reinforcing fibers to form a fiber preform, for the production of a fiber-reinforced composite component by impregnation with a curable synthetic material, wherein the fixing thread (1, 5, 10, 16) comprises an interface (4, 9, 15, 19) of a thermoplastic synthetic material for locally increasing the ductility of a matrix formed by the curable synthetic material in the regions where the fixing thread penetrates, the fixing thread (1, 5, 10, 16) having at least one core thread (2, 6, 11, 12, 17), which is formed by a plurality of filaments of carbon fibers, **characterized in that** the interface (4) is formed by an enclosure (3) enclosing the at least one core thread (2).

3. Fixing thread (1, 5, 10, 16) for sewing together reinforcing fibers to form a fiber preform, for the production of a fiber-reinforced composite component by impregnation with a curable synthetic material, wherein the fixing thread (1, 5, 10, 16) comprises an interface (4, 9, 15, 19) of a thermoplastic synthetic material for locally increasing the ductility of a matrix formed by the curable synthetic material in the regions where the fixing thread penetrates, the fixing thread (1, 5, 10, 16) having at least one core thread (2, 6, 11, 12, 17), which is formed by a plurality of filaments of carbon fibers, **characterized in that** the interface (9) is formed by a bonding of at least one core thread (6) with a semicircular cross-sectional geometry with an interface thread (7) with a semicircular cross-sectional geometry.

4. Fixing thread (1, 5, 10, 16) for sewing together reinforcing fibers to form a fiber preform, for the production of a fiber-reinforced composite component by impregnation with a curable synthetic material, wherein the fixing thread (1, 5, 10, 16) comprises an interface (4, 9, 15, 19) of a thermoplastic synthetic material for locally increasing the ductility of a matrix formed by the curable synthetic material in the regions where the fixing thread penetrates, the fixing thread (1, 5, 10, 16) having at least one core thread (2, 6, 11, 12, 17), which is formed by a plurality of filaments of carbon fibers, **characterized in that** the interface (15) is formed by a twisting of the at least one core thread (11, 12) with at least one interface thread (13, 14).

5. Fixing thread (1, 5, 10, 16) for sewing together reinforcing fibers to form a fiber preform, for the production of a fiber-reinforced composite component by impregnation with a curable synthetic material, wherein the fixing thread (1, 5, 10, 16) comprises an interface (4, 9, 15, 19) of a thermoplastic synthetic material for locally increasing the ductility of a matrix formed by the curable synthetic material in the regions where the fixing thread penetrates, the fixing thread (1, 5, 10, 16) having at least one core thread (2, 6, 11, 12, 17), which is formed by a plurality of filaments of carbon fibers, **characterized in that** the interface (19) is formed by the at least one core thread (17) being wound around by at least one interface thread (18) in strip form.

6. Fixing thread (1, 5, 10, 16) according to any of claims 2 to 5, **characterized in that** the fixing thread (1, 5, 10, 16) has a substantially circular circumferential contour.

## Revendications

1. Utilisation d'un fil de fixation (1, 5, 10, 16) permettant d'attacher des fibres de renforcement pour former un préformé fibreux pour la fabrication d'une structure composite renforcée de fibres par l'imprégnation d'un matériau synthétique durcissable, le fil de fixation (1, 5, 10, 16) présentant une interface (4, 9, 15, 19) en matériau synthétique thermoplastique pour augmenter localement la ductilité dans les zones de piquage du fil de fixation d'une matrice formée par le matériau synthétique durcissable, le fil de fixation (1, 5, 10, 16) présentant au moins un fil de base (2, 6, 11, 12, 17) qui est formé par une multitude de filaments en fibres de carbone, **caractérisée en ce que** l'interface (4) est formée par un enrobage (3) du au moins un fil de base (2) .

2. Fil de fixation (1, 5, 10, 16) permettant d'attacher des fibres de renforcement pour former un préformé fibreux, pour la fabrication d'une structure composite renforcée de fibres par l'imprégnation d'un matériau synthétique durcissable, le fil de fixation (1, 5, 10, 16) présentant une interface (4, 9, 15, 19) en matériau synthétique thermoplastique pour augmenter localement la ductilité dans les zones de piquage du fil de fixation d'une matrice formée par le matériau synthétique durcissable, le fil de fixation (1, 5, 10, 16) présentant au moins un fil de base (2, 6, 11, 12, 17) qui est formé par une multitude de filaments en fibres de carbone, **caractérisé en ce que** l'interface (4) est formée par un enrobage (3) du au moins un fil de base (2).

3. Fil de fixation (1, 5, 10, 16) permettant d'attacher des fibres de renforcement pour former un préformé fibreux, pour la fabrication d'une structure composite renforcée de fibres par l'imprégnation d'un matériau synthétique durcissable, le fil de fixation (1, 5, 10, 16) présentant une interface (4, 9, 15, 19) en matériau synthétique thermoplastique pour augmenter localement la ductilité dans les zones de piquage du fil de fixation d'une matrice formée par le matériau synthétique durcissable, le fil de fixation (1, 5, 10, 16) présentant au moins un fil de base (2, 6, 11, 12, 17) qui est formé par une multitude de filaments en fibres de carbone, **caractérisé en ce que** l'interface (9) est formée par une liaison d'au moins un fil de base (6) présentant une géométrie de section semi-circulaire avec un fil d'interface (7) présentant une géométrie de section semi-circulaire.

4. Fil de fixation (1, 5, 10, 16) permettant d'attacher des fibres de renforcement pour former un préformé fibreux, pour la fabrication d'une structure composite renforcée de fibres par l'imprégnation d'un matériau synthétique durcissable, le fil de fixation (1, 5, 10, 16) présentant une interface (4, 9, 15, 19) en matériau synthétique thermoplastique pour augmenter localement la ductilité dans les zones de piquage du fil de fixation d'une matrice formée par le matériau synthétique durcissable, le fil de fixation (1, 5, 10, 16) présentant au moins un fil de base (2, 6, 11, 12, 17) qui est formé par une multitude de filaments en fibres de carbone, **caractérisé en ce que** l'interface (15) est formée par une torsion du au moins un fil de base (11, 12) avec au moins un fil d'interface (13, 14).

5. Fil de fixation (1, 5, 10, 16) permettant d'attacher des fibres de renforcement pour former un préformé fibreux, pour la fabrication d'une structure composite renforcée de fibres par l'imprégnation d'un matériau synthétique durcissable, le fil de fixation (1, 5, 10, 16) présentant une interface (4, 9, 15, 19) en matériau synthétique thermoplastique pour augmenter localement la ductilité dans les zones de piquage du fil de fixation d'une matrice formée par le matériau synthétique durcissable, le fil de fixation (1, 5, 10, 16) présentant au moins un fil de base (2, 6, 11, 12, 17) qui est formé par une multitude de filaments en fibres de carbone, **caractérisé en ce que** l'interface (19) est formée par l'enroulement du au moins un fil de base (17) avec au moins un fil d'interface (18) en forme de bande.

6. Fil de fixation (1, 5, 10, 16) selon l'une des revendications 2 à 5, **caractérisé en ce que** le fil de fixation (1, 5, 10, 16) présente un contour périphérique sensiblement circulaire.
